# EUROPEAN PATENT APPLICATION

(11) **EP 4 365 783 A1**
(43) Date of publication of application: **08.05.2024**
(21) Application number: 23206590.4
(22) Date of filing: 30.10.2023
(51) Int. Cl.: G06N 20/00, H04W 64/00

(54) **TRAINING DATA CHARACTERIZATION AND OPTIMIZATION FOR A POSITIONING TASK**

(30) Priority: 07.11.2022 GB 202216521
(71) Applicant: Nokia Technologies Oy, 02610 Espoo (FI)
(72) Inventor: FEKI, Afef, Sceaux (FR); ASHRAF, Muhammad Ikram, Espoo (FI); BARBU, Oana-Elena, Aalborg (DK); PRASAD, Athul, Naperville (US)
(74) Representative: Nokia EPO representatives

(57) **Abstract**

A method comprising: determining at a first device a requirement for a spatial distribution associated with training samples for a machine learning model, wherein the machine learning model is used in solving a positioning task; performing at least one of: transmitting, to the second device, information indicating the requirement for training the machine learning model, or training the machine learning model by using a training dataset comprising training samples satisfying the requirement.

## Description

### FIELDS

Various example embodiments of the present disclosure generally relate to the field of telecommunication and in particular, to methods, devices, apparatuses and computer readable storage medium for training data characterization and optimization for a positioning task.

### BACKGROUND

In the telecommunication industry, Artificial Intelligence / Machine Learning (AI/ML) models (which are also referred to as ML models for short) have been employed in telecommunication systems to improve the performance of telecommunications systems. For example, the ML models have been employed in various positioning task. The ML models are usually trained using a training dataset including labelled samples. For example, the labelled samples may include radio measurements and corresponding position. The quality of the training samples impacts the performance of the ML models in a positioning task.

### SUMMARY

In a first aspect of the present disclosure, there is provided a first device. The first device comprises at least one processor; and at least one memory storing instructions that, when executed by the at least one processor, cause the first device at least to perform: determining a requirement for a spatial distribution associated with training samples for a machine learning model, wherein the machine learning model is used in solving a positioning task; and performing at least one of: transmitting, to the second device, information indicating the requirement for training the machine learning model, or training the machine learning model by using a training dataset comprising training samples satisfying the requirement.

In a second aspect of the present disclosure, there is provided a second device. The second device comprises at least one processor; and at least one memory storing instructions that, when executed by the at least one processor, cause the second device at least to perform: receiving, from a first device, information indicating a requirement for a spatial distribution associated with training samples for a machine learning model, wherein the machine learning model is used in solving a positioning task; determining a training dataset comprising training samples satisfying the requirement at least based on a plurality of samples associated with positioning of a plurality of devices; and training the machine learning model by using the training dataset.

In a third aspect of the present disclosure, there is provided a method. The method comprises: determining, at a first device, a requirement for a spatial distribution associated with training samples for a machine learning model, wherein the machine learning model is used in solving a positioning task; performing at least one of: transmitting, to the second device, information indicating the requirement for training the machine learning model, or training the machine learning model by using a training dataset comprising training samples satisfying the requirement.

In a fourth aspect of the present disclosure, there is provided a method. The method comprises: receiving, at a second device from a first device, information indicating a requirement for a spatial distribution associated with training samples for a machine learning model, wherein the machine learning model is used in solving a positioning task; determining a training dataset comprising training samples satisfying the requirement at least based on a plurality of samples associated with positioning of a plurality of devices; and training the machine learning model by using the training dataset.

In a fifth aspect of the present disclosure, there is provided a computer readable medium. The computer readable medium comprises instructions stored thereon for causing an apparatus to perform at least the method according to the third aspect.

In a sixth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates example samples and their example locations in spatial domain according to some example embodiments of the present disclosure;
FIG. 3 illustrates a signaling chart for communication according to some example embodiments of the present disclosure;
FIGS. 4A-4B illustrate example G function plots of samples according to some example embodiments of the present disclosure;
FIG. 5 illustrates an example process for training an ML model at the second device according to some example embodiments of the present disclosure;
FIG. 6 illustrates an example process for training an ML model at the first device according to some example embodiments of the present disclosure;
FIG. 7 illustrates a flowchart of a method implemented at a first device according to some example embodiments of the present disclosure;
FIG. 8 illustrates a flowchart of a method implemented at a second device according to some example embodiments of the present disclosure;
FIG. 9 illustrates a simplified block diagram of a device that is suitable for implementing example embodiments of the present disclosure; and
FIG. 10 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

In the following, the terms "ML", "Al" and "AI/ML" may be used interchangeably. The terms "model", "ML model", "AI model" and "AI/ML model" may be used interchangeably

### Example Environment

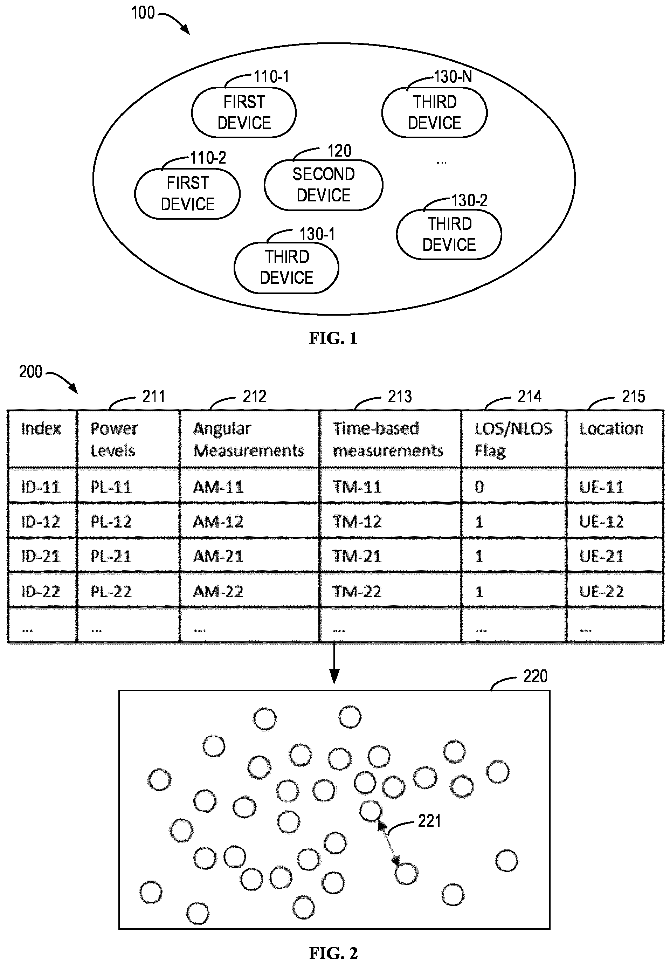

FIG. 1 illustrates an example communication environment 100 in which example embodiments of the present disclosure can be implemented. The communication environment 100 includes a first device 110-1 and a first device 110-2, which can be collectively referred to as "first devices 110" or individually referred to as "first device 110". The communication environment 100 further includes a second device 120. The communication environment 100 also includes a third device 130-1, a third device 130-2, ... , and a third device 130-N, which can be collectively referred to as "third devices 130" or individually referred to as "third device 130". The first device 110, the second device 120 and the third devices 130 can communicate with each other.

In some example embodiments, the first device 110 may include a network device. For example, the first device 110-1 may include a base station, such as a gNB. The first device 110-2 may include a core network device, such as a device on which a location management function (LMF) can be implemented. The second device 120 may include a terminal device, such as an UE.

It is to be understood that the number of devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional devices may be located in the communication environment 100.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

A positioning task associated with the second device 120 may be based on or assisted by an ML model. For example, the positioning task may include positioning of the second device 120 or in other words estimation of the location of the second device 120.

Take the positioning of the second device 120 as an example. In some example embodiments, the Al/ML based positioning approach may be a one-step positioning approach. The one-step positioning approach may have AI/ML model hosted or deployed at the second device 120 or the first device 110. The inputs to the ML model may include various channel observations such as (reference signal received power) RSRP measurements, channel impulse response (CIR), cell identifiers (IDs), beam IDs, Time of arrival (ToA), angle of arrival (AoA)/departure, etc. These values are provided as input to the ML model which then provides the location of the second device 120 as an output, for example an 2D position of the second device 120.

This approach has a potential for high-accuracy performance even in heavy non-line-of-sight (NLOS) conditions as well as relative simplicity in terms of training and deployment - with a single node being used for such scenarios. This approach is sensitive to changes in the propagation environment, as frequency-selective fading channels, which results in a poor generalization of the trained ML model and higher computational complexity required to achieve significantly high positioning accuracy and scenario dependence for model usage.

In some example embodiments, the Al/ML based positioning approach may be a two-step positioning approach. There may be two options for the two-step positioning approach. In a first option, two separate AI/ML models, for example, model-1 and model-2 are used. These two models may be hosted at the second device 120 and the first device 110, respectively. Possible intermediate features output by the model-1 may be exchanged between the second device 120 and the first device 110. The intermediate features may include but not be limited to line-of-sight (LOS)/NLOS flag, time, power and angular features.

In a second option, an ML model (Model-1) is hosted at the second device 120 or the first device 110. Possible intermediate features along with improved channel observations may be used by a classical approach hosted at the first device 110. The classical approach then derives the location of the second device 120.

It is to be understood that in both the one-step and two-step approaches, each step could be realized in separate entities or in a single entity. So, there can be more options as compared to the ones described herein. Moreover, for example, instead of the UE and network, a sidelink scenario may also be considered e.g., with model-1 at UE-1 and model-2 at UE-2.

The one-step positioning approach is also called direct AI/ML positioning, and the two-step positioning approach is also called indirect AI/ML positioning.

In some example embodiments, when reporting evaluation results with direct AI/ML positioning and/or AI/ML assisted positioning, it may be expected to describe if a one-sided model or a two-sided model is used. If one-sided model (i.e., UE-side model or network-side model) is used, which side the model inference is performed (e.g., UE, network), and any details specific to the side that performs the AI/ML model inference may be reported. If two-sided model is used, which side (e.g., UE, network) performs the first part of interference, and which side (e.g., network, UE) performs the remaining part of the inference may be reported.

In some example embodiments, the AI/ML positioning in the environment 100 may include UE-based positioning with UE-side model, direct AI/ML or AI/ML assisted positioning. Alternatively, or in addition, the AI/ML positioning in the environment 100 may include UE-assisted/LMF-based positioning with UE-side model, AI/ML assisted positioning. Alternatively, or in addition, the AI/ML positioning in the environment 100 may include UE-assisted/LMF-based positioning with LMF-side model, direct AI/ML positioning. Accordingly, in the case of second device-side model training and inference, the first device 110 may transmit possible assistance information to the second device 120 for training. In the case of first device-side model training and inference, the second device 120 may transmit to the first device 110 reports or feedbacks for training and interference.

In some example embodiments, the training entity may be the same entity to obtain the training data which includes the labels, for example locations of the UEs. Accordingly, signaling between different entities is needed to enable data collection.

In the environment 100, the ML model used in a positioning task may be trained and tested (or validated) by using samples collected from the third devices 130. The third devices 130 may include a terminal device, for example, a mobile device. Alternatively, or in addition, the third devices 130 may include a positioning reference unit (PRU) or any other suitable data collection devices. The PRUs are reference units such as devices or network nodes at known locations (that is, having label information).

Reference is now made to FIG. 2. FIG. 2 shows an example dataset 200 comprising different samples with each row corresponding to a sample. The columns 211, 212, 213 and 214 correspond to measurements or channel observations of the samples, while the column 215 corresponds to labels of the samples. In the example of FIG. 2, the labels are the locations of the samples. FIG. 2 also shows an example distribution 220 of the samples in spatial domain. A point in the example distribution 200 represents a sample. An inter-point distance (IPD) 221 may refer to the Euclidean distance between the locations associated with the training samples. It is to be understood that the samples and their distribution in the spatial domain as shown in FIG. 2 are given as example without any limitation.

As mentioned above, the ML model can be employed in a positioning task. The ML model may be trained with a training dataset of training samples. Training dataset quality is crucial to reach well trained ML model which allows to obtain the targeted accuracy in all locations. For example, it has been observed that having sparsely distributed training dataset significantly deteriorates the positioning error performance in the test dataset, as compared to the scenario where sufficiently diverse labelled datasets are available. Therefore, having dense and uniformly distributed data in spatial domain can facilitate achieving high positioning accuracy.

For the positioning task, the distribution of samples' locations in the collected training dataset in spatial domain is important: this mainly relates to the inner characteristics of the training data set considering point pattern analysis (e.g. how the points are spatially distributed such as clustered or totally random, the distance between the different points).

So far, there is no available solution which allows to assess the quality of the training dataset in automatic manner from spatial process perspective, accounting for its inner attributes - such as environmental attributes including e.g., clutter density, size and height. There is close relationship between: (1) the spatial distribution attributes of the training data set, such as the distance between the geographical locations associated with the training data points and (2) the achievable positioning accuracy with the trained ML model.

Therefore, it is needed to translate this relationship in order to provide the required training set quality (over the whole area of interest) with regards to a targeted location quality of service (QoS) or accuracy. Addressing this problem would have different impacts, depending on whether UE-based or LMF-based/UE-assisted localization mechanisms are utilized, especially depending on the model training and inference node.

The problem scenario may be described as below. In the scenario, the environmental attributes in terms of clutter, synchronization/timing errors, etc., may be varying, with the network collecting measurements from the UE, building labelled datasets from the measurements and possibly: (a) utilizing the dataset for training AI/ML models for positioning - for network/LMF-based model training, inference and positioning or (b) sharing the dataset with the UEs for training AI/ML models for positioning - for UE-based model training, inference and positioning. In the scenario, it is considered that, if clutter density is an environment attribute that is taken into consideration, the amount of dataset with a given Euclidean distance between the locations associated with the training data points would be proportional to the amount of clutter in the scenario. Thus, the Euclidean distance between the samples would be lower for dense or heavy clutter scenario as compared to a medium clutter scenario, this is due to the fact that a small change in such challenging environment might cause significant performance difference in terms of positioning accuracy.

In view of the above, the key problem to be addressed relates to how network can ensure target positioning accuracy requirements for an AI/ML model, based on the attributes of the environment in which the model is deployed. Possible signaling enhancements may be considered to ensure that there is sufficient spatial diversity within the labelled dataset.

In some approaches, a completed radio reference (RF) fingerprinting map meets a set of predefined requirements mainly on the granularity and spatial distribution of geolocated information. However, these approaches cannot solve the above problem.

### Work Principle and Example Signaling for Communication

According to some example embodiments of the present disclosure, there is provided a solution for training data characterization and optimization for a positioning task. In this solution, a first device determines a requirement for a spatial distribution associated with training samples for a ML model. The ML model is used in a positioning task. The first device may transmit to a second device information indicating the requirement. The second device can determine a training dataset comprising training samples meeting the requirement and trains the ML model by using such a training dataset. Alternatively, or in addition, the first device may train the ML model by using a training dataset comprising training samples meeting the requirement.

In the example embodiments, the quality of the training dataset in terms of the spatial attribute can be ensured. For example, the training samples can be sufficiently diverse in the spatial domain. In this way, the trained ML model can achieve target performance in the positioning task.

Example embodiments of the present disclosure will be described in detail below with reference to the accompanying drawings.

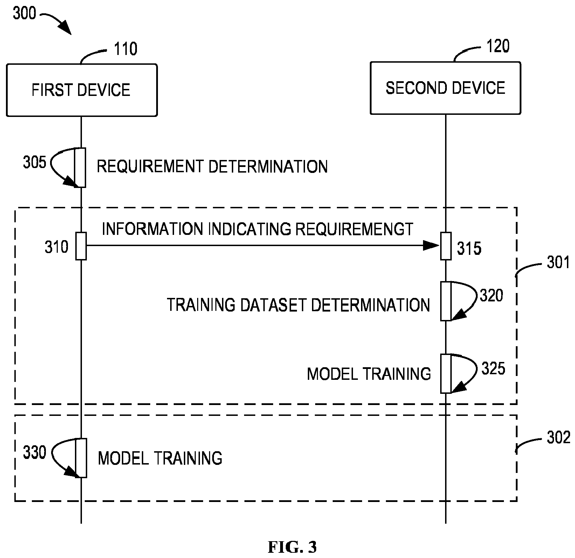

Reference is now made to FIG. 3, which illustrates a signaling chart 300 for communication according to some example embodiments of the present disclosure. As shown in FIG. 3, the signaling chart 300 involves the first device 110 and the second device 120. Although one first device 110 and one second device 120 are illustrated in FIG. 3, it would be appreciated that there may be a plurality of devices performing similar operations as described with respect to the first device 110 or the second device 120 below.

In operation, the first device 110 determines (305) a requirement for a spatial distribution associated with training samples for a ML model. The ML model is used in solving a positioning task. In an example, the positioning task may include a positioning of the second device 120 or in other words location estimation of the second device 120.

In some example embodiments, the ML model may be used in a directed ML positioning approach. Accordingly, the ML model may output a result of the positioning task. For example, the ML model may determine the location of the second device 120 directly. Alternatively, in some example embodiments, the ML model may be used in an ML assisted positioning approach. Accordingly, the ML model may output one or more intermediate features, which are subsequently used to determine the result of the positioning task, for example, the location of the second device 120. The intermediate features may include but not be limited to LOS/NLOS flag, time, power and angular features.

The spatial distribution associated with the training samples may represent a distribution of locations of the training samples. If the training samples have respective location labels, the spatial distribution is associated with the location labels, such as the labels in column 215. The spatial distribution can characterize the training dataset by considering it as a spatial point pattern.

The requirement for the spatial distribution (which may be referred to as "spatial distribution requirement") may be implemented in any suitable manner. For example, the requirement may include one or more parameters or functions describing a target spatial distribution.

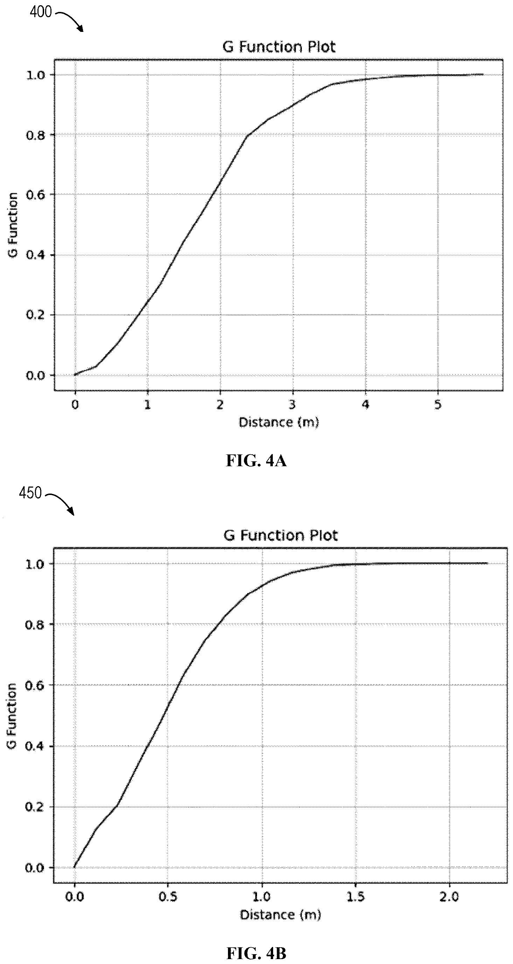

In some example embodiments, the spatial distribution requirement may include a threshold associated with distances between locations of the training samples. The distances between the locations of the training samples may be represented by the IPD metric and the threshold is an IPD threshold. The IPD metric is a tunnable metric to characterize the collected training dataset considering it as a spatial point pattern. For example, the IPD metric may be a mean value or a point within the distribution of IPD values within the samples (for e.g., 90th percentile). This IPD metric can also be inferred from statistics defined for point pattern such as G-function, as described below with reference to FIG. 4A and FIG. 4B.

In some example embodiments, the first device 110 may determine the spatial distribution requirement as a function of a target positioning metric of the positioning task. For example, the first device 110 may split or divide collected samples into a first dataset for training the ML model and a second dataset for testing the ML model. Then, the first device 110 may determine a spatial distribution associated with samples in the first dataset. The first device 110 may also use the ML model to generate first results of the positioning task for the samples in the test dataset. If a positioning metric (for example, a positioning accuracy in the case of location estimation) over the first results satisfies a target positioning metric of the positioning task, the spatial distribution requirement may be determined based on the spatial distribution associated with the samples in the first dataset. If the positioning metric over the first results fails to satisfy the target positioning metric, the first device 110 may perform the division of the collected samples again to repeat the above procedure until the target positioning metric is satisfied. In this way, the spatial distribution requirement is determined as a function of the target position metric.

An example is now described where the positioning task is location estimation, and the spatial distribution requirement is the IPD metric. In this example, the IPD threshold may be computed using a function usually used for spatial process analysis, which is called Ripley's G function. The G function focuses on the distribution of nearest neighbor distances. That is, the G function summarizes the distances between each point in the pattern and their nearest neighbor. Ripley's G function keeps track of the proportion of points for which the nearest neighbor is within a given distance threshold. The cumulative percentage is plotted against the increasing distance radii. The distribution of these cumulative percentage has a distinctive shape under completely spatially random processes.

FIG. 4A and FIG. 4B show the Ripley's G functions 400 and 450 for two cases. In the case of FIG. 4A, the total collected samples are divided into 5% for training dataset and 95% for the test data, and the G function range -estimated on the training data set- is [0,5.5] meters. In the case of FIG. 4B, the total collected samples are divided into 50% for training dataset and 50% for test data, and the G function range -estimated on the training dataset- is [0, 2.5] meters. As can be seen clearly, there is a large gap between the two cases. The range is much larger for the case where the training dataset only occupies 5% of the total collected samples, which shows larger distances among the different located training samples.

As an example, the IPD metric may be defined as the maximum G function value. Then, for the case of FIG. 4A, the IPD metric has a value of 5.5 meters and the achievable positioning accuracy, which is defined as 90% cumulative distribution function (CDF) value on the test dataset, is 136 m. For the case of FIG. 4B, the IPD metric has a value of 2.5 meters and the achievable positioning accuracy, which is defined as 90% CDF value on the test dataset, is 2.59 m. If the target positioning accuracy is below or equal to 2.59 m, the IPD threshold may be determined as 2.5 meters.

In this way, the IPD threshold can be computed by training the ML model with various values of IPD metric and computing the achievable positioning accuracy on the test dataset. It is to be understood that the determination of the IPD threshold described with reference to FIG. 4A and FIG. 4B is given as an example without any limitation. Moreover, alternative to or in addition to the target positioning metric, the first device 110 may determine the spatial distribution requirement as a function of other factors, for example, environment parameters/attributes such as clutter density.

Reference is made back to FIG. 3. In some example embodiments, the process 301 may be performed, for example in the case of second device-based positioning with model training and inference at the second device 120. Specifically, the first device 110 may transmit (310) information indicating the requirement (which is also referred to as requirement information) to the second device 120. For example, the first device 110 may transmit the IPD threshold to the second device 120. The requirement information may be transmitted via any suitable signaling, such as, via an NR positioning protocol annex (NRPPa), an LTE positioning protocol or radio resource control (RRC) signaling.

In some example embodiments, the first device 120 may further transmit the collected samples for training and testing the ML model to the second device 120. The collected samples may be transmitted along with or separately from the requirement information. If the second device 120 is provided with samples using non-cellular signaling (such as non-3GPP signaling), the first device 110 may transmit the requirement information to the second device 120 depending on the coarse estimate of the location of the second device 120 or based on various attributes of the cell or environment the second device 120 belongs.

The second device 120 may receive (315) the requirement information from the first device 110. As such, the second device 120 may be aware of the requirement for the spatial distribution associated with the training samples.

Then, the second device 120 may determine (320) a training dataset comprising training samples satisfying the requirement. For example, the IPD metric for the training samples in the training dataset is below (which means equal to or smaller than) the IPD threshold. The second device 120 may obtain samples to be used. These samples may be received from the first device 110, or received via a non-3GPP signaling, or collected autonomously. The second device 120 may divide these samples into the training dataset and a test dataset such that samples in the training dataset satisfy the requirement. If these samples cannot satisfy the requirement, the second device 120 may obtain additional samples. For example, the second device 120 may request the additional samples from the first device 110, or via a non-3GPP signaling, or collect the additional samples autonomously. Then, the second device 120 may select the samples for the training dataset from the previously obtained samples and the additional samples, such that the selected samples satisfy the requirement.

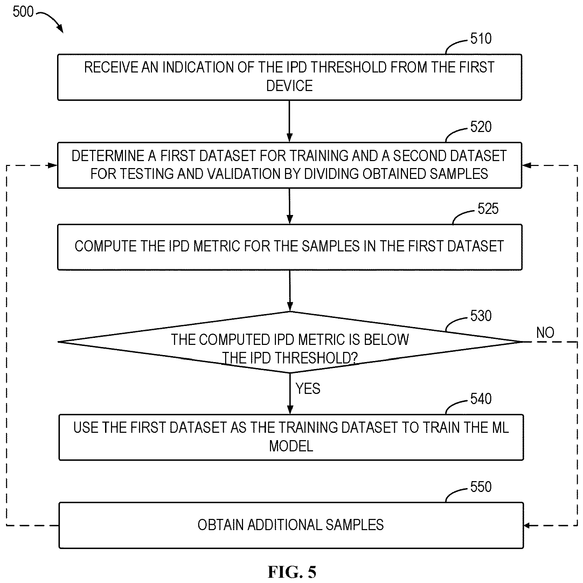

In this way, before using the training samples to train the ML model, the second device 120 can ensure that the training samples satisfy the requirement. Some example embodiments regarding determination of the training dataset at the second device 120 will be described in detail with reference to FIG. 5.

Continuing with the process 301, the second device 120 may train (325) the ML model by using the training dataset with training sample satisfying the requirement.

In some example embodiments, if a current version of the ML model is already trained by a training dataset, the second device 120 may determine whether training samples in the training dataset satisfy the requirement. If the requirement is not satisfied, the second device 120 may update the training dataset such that training samples in the updated training dataset satisfy the requirement. For example, the second device 120 may re-divide the previously obtained samples into the training dataset and the test dataset by increasing the proportion of the training samples. Alternatively, or in addition, the second device 120 may obtain additional samples. The second device 120 may update the training dataset by using the additional samples. Then, the second device 120 may update the current version of the ML model by using the updated training dataset. For example, the ML model may re-trained or fine-tuned.

In this way, the second device 120 (such as the UE) ensures that the model training is conducted taking the spatial distribution requirement into account. This means that the ML model is trained with sufficient spatial diversity. As such, the trained ML model can have an improved performance in the positioning task. For example, the trained ML model can provide target horizontal positioning accuracy in location estimation.

In some example embodiments, the process 302 may be performed, for example in the case of second device-assisted positioning, or the first device-based positioning with model training and inference at the first device 110. In the process 302, the first device 110 may train (330) the ML model by using a training dataset comprising training samples satisfying the requirement. In some example embodiments, the first device 110 may divide the collected samples into the training dataset and a test dataset, such that the training samples in the training dataset satisfy the requirement. For example, the IPD metric of the training samples in the training dataset is below the IPD threshold.

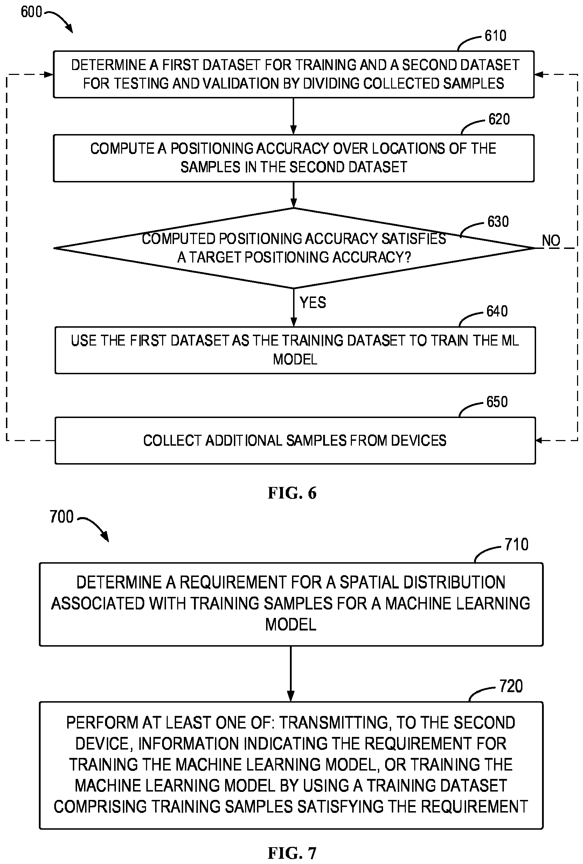

In some example embodiments, in order to determine the training dataset, the first device 110 may check whether the training samples provide a positioning metric satisfying the target positioning metric of the positioning task. For example, in the case of location estimation, the positioning metric may be the positioning accuracy of locations determined based on the ML model. If the training samples cannot provide the positioning metric satisfying the target positioning metric, the first device 110 may trigger collection of additional samples from the third devices 130, for example, the PRUs or mobile devices. These additional samples may facilitate the satisfaction of the requirement. For example, in the case of low positioning accuracy, the first device 110 may collect additional samples from PRUs and/or UEs satisfying the requirement. Some example embodiments for the process 302 will be described in detail with reference to FIG. 6.

In some example embodiments, the first device 110 may first collect additional samples from the PRUs, since the locations of the PRUs are known with a high accuracy. If the additional samples from the PRUs cannot satisfy the requirement, the first device 110 may further collect additional sample from the mobile devices, for example, UEs.

In this way, the first device 110 (such as the gNB or the LMF) ensures that the model training is conducted taking the spatial distribution requirement into account. This means that the ML model is trained with sufficient spatial diversity. As such, the trained ML model can have an improved performance in the positioning task. For example, the trained ML model can provide target horizontal positioning accuracy in location estimation.

### Example process at the second device

As mentioned above, the second device 120 may use the training samples satisfying the requirement to train the ML model. FIG. 5 illustrates an example process 500 for training an ML model at the second device 120 according to some example embodiments of the present disclosure. The process 500 may be considered as an example implementation of the process 301. The process 500 is now described with the location estimation as an example of the positioning task and the IPD threshold as an example of the spatial distribution requirement.

At block 510, the second device 120 may receive an indication of the IPD threshold from the first device 110. The signaling of the IPD threshold from the first device 110 to the second device 120 may be implemented using new LPP signaling enhancement or using RRC signaling. At block 520, the second device 120 may determine a first dataset for training and a second dataset for testing and validation by dividing obtained samples. For example, the second device 120 may randomly split the obtained samples. These samples may be received from the first device 110. Alternatively, or in addition, these samples may be received via a non-3GPP signaling. Alternatively, or in addition, these samples may be collected by the second device 120 autonomously. Based on the location labels of samples in the first dataset, at block 525, the second device 120 may compute the IPD metric for the samples in the first dataset.

At block 530, the second device 120 may determine whether the computed IPD metric is below the IPD threshold. If the computed IPD metric is below the IPD threshold, the process 500 may proceed to block 540. At block 540, the second device 120 may use the first dataset as the training dataset to train the ML model.

In some example embodiments, if the computed IPD metric exceeds the IPD threshold, the process 500 may go back to block 520. This means that the second device 120 may re-divide the samples into the first dataset and the second dataset. Accordingly, the first and second datasets may be updated. The second device 120 may then compute the IPD metric for the samples in the updated first dataset. Check of the IPD metric is performed again at block 530.

In some example embodiments, if the computed IPD metric exceeds the IPD threshold, the process 500 may proceed to the block 550. For example, if the blocks 520, 525 and 530 have been performed several times, but none of the division of the samples can meet the IPD threshold, the process 500 may proceed to the block 550. At block 550, the second device 120 may obtain additional samples. For example, the second device 120 may request the additional samples from the first device 120, or via non-3GPP signaling. Alternatively, or in addition, the second device 120 may collect the additional samples autonomously.

After obtaining the additional samples, the process 500 may go back to the block 520. At block 520, the previously obtained samples and the additional samples may be divided into the first dataset and the second dataset. Then, the IPD threshold may be checked again at block 530.

Through the process 500, by splitting the samples at least once and/or by collecting more samples, it is ensured that the ML model is trained with spatial diversity. The process 500 is described by taking the location estimation as an example of the positioning task and taking the IPD metric as an example of the spatial distribution requirement. However, this is illustrative without any limitation. Similar process may be applied to any other positioning task and spatial distribution requirement.

### Example process at the first device

As mentioned above, in some example embodiments, in order to determine the training dataset satisfying the spatial distribution requirement, the first device 110 may check whether the training samples provide a positioning metric satisfying the target positioning metric of the positioning task. FIG. 6 illustrates an example process 600 for training an ML model at the first device 110 according to some example embodiments of the present disclosure. The process 600 may be considered as an example implementation of the process 302. The process 600 is now described with the location estimation as an example of the positioning task, the IPD threshold as an example of the spatial distribution requirement and the positioning accuracy as an example of the positioning metric.

At block 610, the first device 110 may determine a first dataset for training and a second dataset for testing and validation by dividing collected samples. For example, the second device 120 may randomly split the collected samples. These samples may be collected from the third devices 130, for example PRUs and UEs. At block 620, the first device 110 may compute a positioning accuracy over locations of the samples in the second dataset. The locations are determined using the ML model trained by the first dataset. The positioning accuracy may comprise the horizontal positioning accuracy for example.

At block 630, the first device 110 may determine whether the computed positioning accuracy satisfies a target positioning accuracy, which may be a positioning accuracy threshold. If the computed positioning accuracy is below the target positioning accuracy, which means the target positioning metric is satisfied, the process 600 may proceed to block 640. At block 640, the first device 110 may use the first dataset as the training dataset to train the ML model.

In some example embodiments, if the computed positioning accuracy does not satisfy the target positioning accuracy, which means the target positioning metric is not satisfied, the process 600 may go back to block 610. This means that the first device 110 may re-divide the collected samples into the first dataset and the second dataset. Accordingly, the first and second datasets may be updated. The first device 110 may then compute the positioning accuracy for the samples in the updated first dataset. Check of the positioning accuracy is performed again at block 630.

In some example embodiments, if the computed positioning accuracy does not satisfy the target positioning accuracy, the process 600 may proceed to the block 650. For example, if the blocks 610, 620 and 630 have been performed several times, but none of the division of the collected samples can meet the target positioning accuracy, the process 500 may proceed to the block 650. At block 650, the first device 110 may collect additional samples from third devices 130. For example, the first device 120 may transmit to the devices 130 a request for samples associated with positioning of the third devices 130. The third devices 130 may include PRUs and UEs. The first device 110 may estimate the location of the UEs using classical time, angular, power-based positioning mechanisms. As a response, the first device 110 may receive the requested samples from the third devices 130. The requested samples can facilitate the satisfaction of the spatial distribution requirement. For example, the requested samples may minimize the IPD metric in the first dataset.

After collected the additional samples, the process 600 may go back to the block 610. At block 610, the previously collected samples and the additional samples may be divided into the first dataset and the second dataset. Then, the positioning accuracy may be checked again at block 630.

Through the process 600, by splitting the samples at least once and/or by collecting more samples, it is ensured that the training dataset is sufficiently diverse. Thus, the trained ML model can provide the target positioning accuracy. Moreover, the positioning metric is checked to determine the training dataset. In this way, the quality of the training samples can be highly ensured. The process 600 is described by taking the location estimation as an example of the positioning task and taking the positioning accuracy as an example of the positioning metric. However, this is illustrative without any limitation. Similar process may be applied to any other positioning task and positioning metric.

From the example processes 500 and 600, it can be seen that the first device 110 (for example, the gNB or LMF) is enabled to be more flexible at the start of the data collection and vetting procedure and more selective when sufficient training samples have been collected. Thus, at the start of this data collection and vetting procedure, the first and second devices are enabled to add the samples to the validation and training dataset even if the similarity to the existing points is high (e.g., if the point is at location in the same neighborhood). The procedure would then become more selective in terms of collecting new samples (e.g., increase the IPD) when there are more than a few points in the training and validation dataset.

### Example Methods

FIG. 7 shows a flowchart of an example method 700 implemented at a first device in accordance with some example embodiments of the present disclosure. For the purpose of discussion, the method 700 will be described from the perspective of the first device 110 in FIG. 1.

At block 710, the first device 110 determines a requirement for a spatial distribution associated with training samples for a machine learning model. The machine learning model is used in solving a positioning task.

At block 720, the first device 110 performs at least one of: transmitting, to the second device, information indicating the requirement for training the machine learning model, or training the machine learning model by using a training dataset comprising training samples satisfying the requirement.

In some example embodiments, the requirement comprises: a threshold associated with distances between locations of the training samples for the machine learning model.

In some example embodiments, determining the requirement comprising: dividing a plurality of samples associated with positioning of a plurality of devices into a first dataset for training the machine learning model and a second dataset for testing the machine learning model; determining a spatial distribution associated with samples in the first dataset and a first positioning metric over first results of the positioning task, the first results being determined for samples in the second dataset based on the machine learning model; determining whether the first positioning metric satisfies a target positioning metric; and in accordance with a determination that the first positioning metric satisfies the target positioning metric, determining the requirement based on the spatial distribution associated with the samples in the first dataset.

In some example embodiments, training the machine learning model is performed. The first device 110 may perform the following operations at least once: determining the training dataset and a test dataset for the machine learning model by dividing previously collected samples; determining whether a second positioning metric over second results of the positioning task satisfies a target positioning metric, the second results being determined for samples in the test dataset based on the machine learning model; and in accordance with a determination that the second positioning metric does not satisfy the target positioning metric, updating the training dataset by dividing at least the previously collected samples.

In some example embodiments, updating the training dataset comprises: transmitting, to third devices, a first request for samples associated with positioning of the third devices, the requested samples facilitating satisfaction of the requirement; receiving the requested samples from the third devices; and updating the training dataset by dividing the received samples and the previously collected samples.

In some example embodiments, the third devices comprises at least one of: a mobile device, or a positioning reference unit.

In some example embodiments, transmitting the information is performed. The first device 110 may transmits, to the second device 120, a plurality of samples associated with positioning of a plurality of devices for training and testing the machine learning model; receive, from the second device 120, a second request for additional samples associated with positioning of a further device; and transmit the additional samples to the second device 120.

In some example embodiments, the first device 110 comprises a network device and the second device 120 comprises a terminal device.

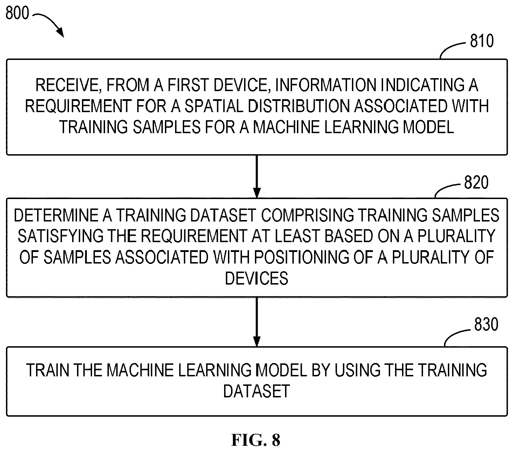

FIG. 8 shows a flowchart of an example method 800 implemented at a second device in accordance with some example embodiments of the present disclosure. For the purpose of discussion, the method 800 will be described from the perspective of the second device 120 in FIG. 1.

At block 810, the second device 120 receives, from a first device 110, information indicating a requirement for a spatial distribution associated with training samples for a machine learning model. The machine learning model is used in solving a positioning task;
At block 820, the second device 120 determines a training dataset comprising training samples satisfying the requirement at least based on a plurality of samples associated with positioning of a plurality of devices.

At block 830, the second device 120 trains the machine learning model by using the training dataset.

In some example embodiments, the requirement comprises: a threshold associated with distances between locations of the training samples for the machine learning model.

In some example embodiments, determining the training dataset comprises: dividing the plurality of samples into a third dataset for training the machine learning model and a fourth dataset for testing the machine learning model; determining whether a spatial distribution associated with samples in the third dataset satisfies the requirement based on location labels of the samples in the third dataset; and in accordance with a determination that the spatial distribution associated with the samples in the third dataset satisfies the requirement, determining the training dataset as the third dataset.

In some example embodiments, the method 800 further comprises: in response to determining that the plurality of samples fails to satisfy the requirement, obtaining additional samples associated with positioning of further devices; and selecting, from the plurality of samples and the additional samples, samples for the training dataset such that the selected samples satisfy the requirement.

In some example embodiments, the method 800 further comprises: receiving the plurality of samples from the first device 110; and wherein obtaining the additional samples comprises: transmitting, to the first device 110, a second request for the additional samples; and receiving the additional samples from the first device 110.

In some example embodiments, obtaining the additional samples comprises at least one of: requesting the additional samples via a non-cellular signaling, or collecting the additional samples autonomously.

In some example embodiments, determining the training dataset comprises: determining whether training samples in the training dataset used to train a current version of the machine learning model satisfy the requirement; in accordance with a determination that the training samples used to train the current version fail to satisfy the requirement, selecting samples to update the training dataset at least from the plurality of samples such that the selected samples satisfy the requirement, and wherein training the machine learning model comprises: updating the current version of the machine learning model by using the updated training dataset.

In some example embodiments, the first device 110 comprises a network device and the second device 120 comprises a terminal device.

### Example Apparatus, Device and Medium

In some example embodiments, a first apparatus capable of performing any of the method 700 (for example, the first device 110 in FIG. 1) may comprise means for performing the respective operations of the method 700. The means may be implemented in any suitable form. For example, the means may be implemented in a circuitry or software module. The first apparatus may be implemented as or included in the first device 110 in FIG. 1.

In some example embodiments, the first apparatus comprises means for determining a requirement for a spatial distribution associated with training samples for a machine learning model, wherein the machine learning model is used in solving a positioning task; at least one of: means for transmitting, to the second apparatus, information indicating the requirement for training the machine learning model, or means for training the machine learning model by using a training dataset comprising training samples satisfying the requirement.

In some example embodiments, the requirement comprises: a threshold associated with distances between locations of the training samples for the machine learning model.

In some example embodiments, the means for determining the requirement comprising: means for dividing a plurality of samples associated with positioning of a plurality of devices into a first dataset for training the machine learning model and a second dataset for testing the machine learning model; means for determining a spatial distribution associated with samples in the first dataset and a first positioning metric over first results of the positioning task, the first results being determined for samples in the second dataset based on the machine learning model; means for determining whether the first positioning metric satisfies a target positioning metric; and means for in accordance with a determination that the first positioning metric satisfies the target positioning metric, determining the requirement based on the spatial distribution associated with the samples in the first dataset.

In some example embodiments, the first apparatus comprises the means for training the machine learning model and the first apparatus further comprises: means for determining the training dataset and a test dataset for the machine learning model by dividing previously collected samples; means for determining whether a second positioning metric over second results of the positioning task satisfies a target positioning metric, the second results being determined for samples in the test dataset based on the machine learning model; and means for in accordance with a determination that the second positioning metric does not satisfy the target positioning metric, updating the training dataset by dividing at least the previously collected samples.

In some example embodiments, the means for updating the training dataset comprises: means for transmitting, to third devices, a first request for samples associated with positioning of the third devices, the requested samples facilitating satisfaction of the requirement; means for receiving the requested samples from the third devices; and means for updating the training dataset by dividing the received samples and the previously collected samples.

In some example embodiments, the third devices comprises at least one of: a mobile device, or a positioning reference unit.

In some example embodiments, the first apparatus comprises the means for transmitting the information and the first apparatus further comprises: means for transmitting, to the second apparatus, a plurality of samples associated with positioning of a plurality of devices for training and testing the machine learning model; means for receiving, from the second apparatus, a second request for additional samples associated with positioning of a further device; and means for transmitting the additional samples to the second apparatus.

In some example embodiments, the first apparatus comprises a network device and the second apparatus comprises a terminal device.

In some example embodiments, the first apparatus further comprises means for performing other operations in some example embodiments of the method 700 or the first device 110. In some example embodiments, the means comprises at least one processor; and at least one memory storing instructions that, when executed by the at least one processor, cause the performance of the first apparatus.

In some example embodiments, a second apparatus capable of performing any of the method 800 (for example, the second device 120 in FIG. 1) may comprise means for performing the respective operations of the method 800. The means may be implemented in any suitable form. For example, the means may be implemented in a circuitry or software module. The second apparatus may be implemented as or included in the second device 120 in FIG. 1.

In some example embodiments, the second apparatus comprises means for receiving, from a first apparatus, information indicating a requirement for a spatial distribution associated with training samples for a machine learning model, wherein the machine learning model is used in solving a positioning task; means for determining a training dataset comprising training samples satisfying the requirement at least based on a plurality of samples associated with positioning of a plurality of devices; and means for training the machine learning model by using the training dataset.

In some example embodiments, the requirement comprises: a threshold associated with distances between locations of the training samples for the machine learning model.

In some example embodiments, the means for determining the training dataset comprises: means for dividing the plurality of samples into a third dataset for training the machine learning model and a fourth dataset for testing the machine learning model; means for determining whether a spatial distribution associated with samples in the third dataset satisfies the requirement based on location labels of the samples in the third dataset; and means for in accordance with a determination that the spatial distribution associated with the samples in the third dataset satisfies the requirement, determining the training dataset as the third dataset.

In some example embodiments, the second apparatus further comprises: means for in response to determining that the plurality of samples fails to satisfy the requirement, obtaining additional samples associated with positioning of further devices; and means for selecting, from the plurality of samples and the additional samples, samples for the training dataset such that the selected samples satisfy the requirement.

In some example embodiments, the second apparatus further comprises: means for receiving the plurality of samples from the first apparatus; and wherein obtaining the additional samples comprises: means for transmitting, to the first apparatus, a second request for the additional samples; and means for receiving the additional samples from the first apparatus.

In some example embodiments, means for obtaining the additional samples comprises at least one of: means for requesting the additional samples via a non-cellular signaling, or means for collecting the additional samples autonomously.

In some example embodiments, means for determining the training dataset comprises: means for determining whether training samples in the training dataset used to train a current version of the machine learning model satisfy the requirement; means for in accordance with a determination that the training samples used to train the current version fail to satisfy the requirement, selecting samples to update the training dataset at least from the plurality of samples such that the selected samples satisfy the requirement, and wherein training the machine learning model comprises: means for updating the current version of the machine learning model by using the updated training dataset.

In some example embodiments, the first apparatus comprises a network device and the second apparatus comprises a terminal device.

In some example embodiments, the second apparatus further comprises means for performing other operations in some example embodiments of the method 800 or the second device 120. In some example embodiments, the means comprises at least one processor; and at least one memory storing instructions that, when executed by the at least one processor, cause the performance of the second apparatus.

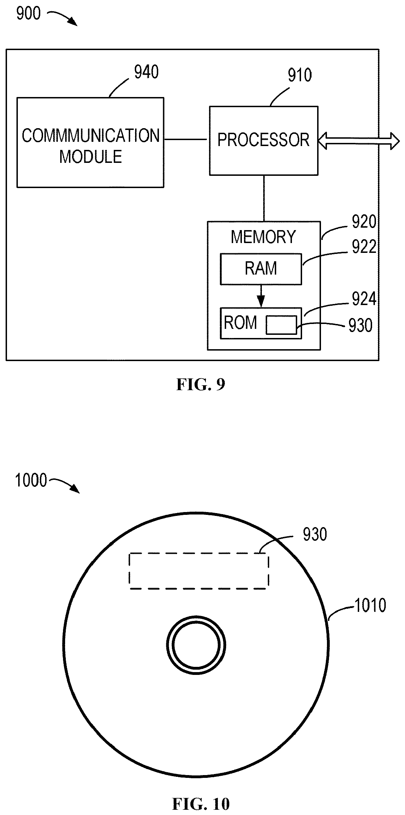

FIG. 9 is a simplified block diagram of a device 900 that is suitable for implementing example embodiments of the present disclosure. The device 900 may be provided to implement a communication device, for example, the first device 110 or the second device 120 as shown in FIG. 1. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The instructions of the program 930 may include instructions for performing operations/acts of some example embodiments of the present disclosure. The program 930 may be stored in the memory, e.g., the ROM 924. The processor 910 may perform any suitable actions and processing by loading the program 930 into the RAM 922.

The example embodiments of the present disclosure may be implemented by means of the program 930 so that the device 900 may perform any process of the disclosure as discussed with reference to FIG. 3, FIG. 5 to FIG. 8. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 10 shows an example of the computer readable medium 1000 which may be in form of CD, DVD or other optical storage disk. The computer readable medium 1000 has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

### A list of Abbreviations

- LMF: Location Management Function;
- PRU: Positioning Reference Unit;
- NRPPa: NR Positioning Protocol Annex;
- IPD: inter point distance;
- CIR: Channel Impulse Response;
- UE: User Equipment;
- 5G: Fifth Generation;
- LTE: Long Term Evolution;

- LTE-A: LTE-Advanced;
- LPP: LTE Positioning Protocol;
- gNB: Next Generation NodeB;
- ToA: Time of arrival;
- 3GPP: 3^{rd} Generation Partnership Project;
- AI: Artificial Intelligence;
- ML: Machine Learning;
- AoA: Angle of Arrival;
- NLOS: Non-Line-of-Sight.

## Claims

1. A first device comprising:
means for determining a requirement for a spatial distribution associated with training samples for a machine learning model, wherein the machine learning model is used in solving a positioning task; and
means for performing at least one of:
transmitting, to the second device, information indicating the requirement for training the machine learning model, or
training the machine learning model by using a training dataset comprising training samples satisfying the requirement.

2. The first device of claim 1, wherein the requirement comprises:
a threshold associated with distances between locations associated with the training samples for the machine learning model.

3. The first device of any of claims 1-2, wherein determining the requirement comprises:
dividing a plurality of samples associated with positioning of a plurality of devices into a first dataset for training the machine learning model and a second dataset for testing the machine learning model;
determining a spatial distribution associated with samples in the first dataset and a first positioning metric over first results of the positioning task, the first results being determined for samples in the second dataset based on the machine learning model;
determining whether the first positioning metric satisfies a target positioning metric; and
in accordance with a determination that the first positioning metric satisfies the target positioning metric, determining the requirement based on the spatial distribution associated with the samples in the first dataset.

4. The first device of any of claims 1-3, wherein training the machine learning model is performed and the first device further comprises means for performing the following operations at least once:
determining the training dataset and a test dataset for the machine learning model by dividing previously collected samples;
determining whether a second positioning metric over second results of the positioning task satisfies a target positioning metric, the second results being determined for samples in the test dataset based on the machine learning model; and
in accordance with a determination that the second positioning metric does not satisfy the target positioning metric, updating the training dataset by dividing at least the previously collected samples.

5. The first device of claim 4, wherein updating the training dataset comprises:
transmitting, to third devices, a first request for samples associated with positioning of the third devices;
receiving the requested samples from the third devices; and
updating the training dataset by dividing the received samples and the previously collected samples.

6. The first device of claim 5, wherein the third devices comprises at least one of:
a mobile device, or
a positioning reference unit.

7. The first device of any of claims 1-3, wherein transmitting the information is performed and the first device further comprises:
means for transmitting, to the second device, a plurality of samples associated with positioning of a plurality of devices for training and testing the machine learning model;
means for receiving, from the second device, a second request for additional samples associated with positioning of a further device; and
means for transmitting the additional samples to the second device.

8. A second device comprising:
means for receiving, from a first device, information indicating a requirement for a spatial distribution associated with training samples for a machine learning model, wherein the machine learning model is used in solving a positioning task;
means for determining a training dataset comprising training samples satisfying the requirement at least based on a plurality of samples associated with positioning of a plurality of devices; and
means for training the machine learning model by using the training dataset.

9. The second device of claim 8, wherein the requirement comprises:
a threshold associated with distances between locations of the training samples for the machine learning model.

10. The second device of any of claims 8-9, wherein determining the training dataset comprises:
dividing the plurality of samples into a third dataset for training the machine learning model and a fourth dataset for testing the machine learning model;
determining whether a spatial distribution associated with samples in the third dataset satisfies the requirement based on location labels of the samples in the third dataset; and
in accordance with a determination that the spatial distribution associated with the samples in the third dataset satisfies the requirement, determining the training dataset as the third dataset.

11. The second device of any of claims 8-9, wherein the second device further comprises:
means for obtaining additional samples associated with positioning of further devices in response to determining that the plurality of samples fails to satisfy the requirement; and
means for selecting, from the plurality of samples and the additional samples, samples for the training dataset such that the selected samples satisfy the requirement.

12. The second device of claim 11, wherein the second device further comprises:
means for receiving the plurality of samples from the first device; and
wherein obtaining the additional samples comprises:
transmitting, to the first device, a second request for the additional samples; and
receiving the additional samples from the first device.

13. The second device of claim 11, wherein obtaining the additional samples comprises at least one of:
requesting the additional samples via a non-cellular signaling, or
collecting the additional samples autonomously.

14. A method comprising:
determining, at a first device, a requirement for a spatial distribution associated with training samples for a machine learning model, wherein the machine learning model is used in solving a positioning task; and
performing at least one of: transmitting, to the second device, information indicating the requirement for training the machine learning model, or training the machine learning model by using a training dataset comprising training samples satisfying the requirement.

15. A method comprising:
receiving, at a second device from a first device, information indicating a requirement for a spatial distribution associated with training samples for a machine learning model, wherein the machine learning model is used in solving a positioning task;
determining a training dataset comprising training samples satisfying the requirement at least based on a plurality of samples associated with positioning of a plurality of devices; and
training the machine learning model by using the training dataset.
